(19) **Europäisches Patentamt / European Patent Office / Office européen des brevets**

(11) **EP 4 528 843 A2**

(12) # EUROPEAN PATENT APPLICATION

(43) Date of publication:
**26.03.2025 Bulletin 2025/13**

(21) Application number: **24196459.2**

(22) Date of filing: **26.08.2024**

(51) International Patent Classification (IPC):
**H01M 4/13** $^{(2010.01)}$    **H01M 10/0525** $^{(2010.01)}$
**H01M 10/0568** $^{(2010.01)}$    **H01M 10/0569** $^{(2010.01)}$

(52) Cooperative Patent Classification (CPC):
**H01M 4/13; H01M 10/0525; H01M 10/0568;
H01M 10/0569;** Y02E 60/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.09.2023   CN 202311223339**

(71) Applicant: **Xiamen Hithium Energy Storage
Technology Co., Ltd.
Xiamen, Fujian 361100 (CN)**

(72) Inventors:
• **KUANG, Mao
  Fujian, 361100 (CN)**
• **WANG, Qichao
  Fujian, 361100 (CN)**

(74) Representative: **Viering, Jentschura & Partner
mbB
Patent- und Rechtsanwälte
Am Brauhaus 8
01099 Dresden (DE)**

(54) **LITHIUM ION CELL, BATTERY PACK, AND ELECTRICITY-CONSUMPTION DEVICE**

(57)    The disclosure relates to the technical field of battery technologies, and relates to a lithium ion cell, a battery pack, and an electricity-consumption device. The lithium ion cell includes a positive electrode, a negative electrode, an electrolyte, and a separator. The separator is arranged between the positive electrode and the negative electrode. The positive electrode, the negative electrode, and the separator cooperatively form an electrode assembly, and at least part of the electrode assembly is infiltrated by the electrolyte. The electrolyte includes a lithium salt and solvents. The solvents include a linear solvent and a cyclic solvent, the positive electrode includes a positive current collector and a positive active material layer, and the negative electrode includes a negative current collector and a negative active material layer. The lithium ion cell satisfies: $0.46 \leq (10 \times D / (CWA + CWC) \times Wb / Wa \leq 3.8$. $CWC$ ranges from 0.13 mg/mm$^2$ to 0.26 mg/mm$^2$, and $CWA$ ranges from 0.065 mg/mm$^2$ to 0.13 mg/mm$^2$. There are improvements in all of the energy density, the energy efficiency, and the dynamic performance of the lithium ion cell.

**EP 4 528 843 A2**

**Description**

TECHNICAL FIELD

The disclosure relates to the field of battery technologies, and in particular, to a lithium ion cell, a battery pack, and an electricity-consumption device using the battery pack.

BACKGROUND

In lithium ion cells, in order to improve the energy density and capacity of the cell, a coating weight of positive and negative active material layers per unit area may be increased. However, an increase in the coating weight of the positive and negative active material layers per unit area may hinder the transfer capacity of lithium ions between the positive and negative electrodes, thereby deteriorating the energy efficiency of the cell. Although an increase in the concentration of the lithium salt in the electrolyte can increase the energy efficiency of the cell, an increase in the concentration of the lithium salt is accompanied by an increase in the viscosity of the electrolyte. A high viscosity of the electrolyte will deteriorate the energy efficiency and dynamic performance of the cell. As a result, the energy density, the energy efficiency, and the dynamic performance of the cell mutually restrain each other, making it difficult to improve all of the energy density, the energy efficiency, and the dynamic performance of the cell.

SUMMARY

A lithium ion cell, a battery pack, and an electricity-consumption device using the battery pack are provided in embodiments of the disclosure, aimed at solving the problem in the related art that the energy density, the energy efficiency, and the dynamic performance of a cell mutually restrain each other and are difficult to improve all of the energy density, energy efficiency, and dynamic performance of the cell.

According to a first aspect, a lithium ion cell is provided in the embodiments of the disclosure. The lithium ion cell includes a positive electrode, a negative electrode, an electrolyte, and a separator. The separator is arranged between the positive electrode and the negative electrode, the positive electrode, the negative electrode, and the separator cooperatively form an electrode assembly, and at least part of the electrode assembly is infiltrated by the electrolyte. The electrolyte includes a lithium salt and solvents. The solvents include a linear solvent and a cyclic solvent, the positive electrode includes a positive current collector and a positive active material layer, and the negative electrode includes a negative current collector and a negative active material layer. The lithium ion cell satisfies: $0.46 \leq (10 \times D / (CWA + CWC) \times Wb / Wa \leq 3.8$, where $CWC$ represents a coating weight of the positive active material layer per unit area on the positive electrode, in $mg/mm^2$, $CWA$ represents a coating weight of the negative active material layer per unit area on the negative electrode, in $mg/mm^2$, $D$ represents a lithium-ion transference number of the electrolyte, $Wb$ represents a mass fraction of the lithium salt in the electrolyte, in %, $Wa$ represents a mass fraction of the linear solvent in the electrolyte, in %; $CWC$ ranges from $0.13\ mg/mm^2$ to $0.26\ mg/mm^2$, and $CWA$ ranges from $0.065\ mg/mm^2$ to $0.13\ mg/mm^2$.

Further, $Wb / Wa$ satisfies: $0.15 < Wb / Wa \leq 0.25$.

Further, $Wb$ ranges from 8% to 20%.

Further, the lithium salt includes at least one of lithium hexafluorophosphate, lithium difluorosulfonimide, lithium difluorooxalate borate, or lithium bis(oxalate)borate.

Further, $Wa$ ranges from 20% to 80%.

Further, the linear solvent includes at least one of diethyl carbonate, ethyl methyl carbonate, dimethyl carbonate, ethyl acetate, ethyl propionate, propyl propionate, 1,1,2,2-tetrafluoroethyl-2,2,3,3-tetrafluoropropyl ether, or ethylene glycol dimethyl ether; and/or the cyclic solvent comprises at least one of ethylene carbonate or propylene carbonate.

Further, $D$ ranges from 0.2 to 0.6.

Further, $D$ and $CWC$ satisfy: $3.84 < 10 \times D / CWC < 46.15$; and/or $D$ and $CWA$ satisfy: $7.69 < 10 \times D / CWA < 92.3$.

In a second aspect, a battery pack is provided in the embodiments of the disclosure. The battery pack includes a box body and the lithium ion cell in the first aspect, where the lithium ion cell is disposed in the box body.

In a third aspect, an electricity-consumption device is provided in the embodiments of the disclosure. The electricity-consumption device includes an electricity-consumption device body and the lithium ion cell in the first aspect, where the lithium ion cell is disposed in the electricity-consumption device body.

Compared with the related art, the beneficial effects of the disclosure are as follows.

The embodiments of the disclosure provide the lithium ion cell. By exploring a relationship among the coating weight ($CWC$) of the positive active material layer per unit area on the positive electrode, the coating weight ($CWA$) of the negative active material layer per unit area on the negative electrode, the lithium-ion transference number ($D$) of the electrolyte, the mass fraction ($Wb$) of lithium salt in the electrolyte, and the mass fraction ($Wa$) of the linear solvent in the electrolyte, it is found that when the above parameters satisfy $0.46 \leq (10 \times D / (CWA + CWC)) \times Wb / Wa \leq 3.8$, it is possible to take advantage of the high coating weights per unit area on the positive and negative electrodes while avoiding the disadvantages of reduced dynamic performance and energy efficiency of the cell. This is because when $CWA$ and $CWC$ are relatively high, although the energy density of the cell increases, the transfer of lithium ions is hindered, resulting in poor dynamic performance. Here, the concentration of lithium ions and the lithium-ion transference number may be increased by increasing $Wb$. However, when $Wb$ istoo high, the lithium-ion transference number may decrease due to an increase in the viscosity of the electrolyte, so $Wa$ needs to be adjusted to regulate the viscosity of the electrolyte, thereby increasing the migration ability of lithium ions and improving the energy efficiency and dynamic performance of the cell.

In other words, when the above relationship is satisfied, it is possible to improve the energy density and capacity of the cell by increasing the coating weight per unit area on the positive and negative electrodes. At the same time, by adjusting the mass fraction of the lithium salt in the electrolyte, where the mass fraction of the lithium salt is related to the lithium-ion transference number and the content of the linear solvent, these three factors may be coordinated to improve the transfer capacity of lithium ions, thereby enhancing the energy efficiency and dynamic performance of the cell. This achieves the purpose of improving all of the energy density, energy efficiency, and dynamic performance of the cell.

## DETAILED DESCRIPTION

The technical solutions provided by the disclosure will be further described below with reference to embodiments.

With the rapid development of new energy technologies, the current demand for the capacity life and energy density of lithium ion cells is increasing. In order to increase the energy density of the cell, a coating weight of an active material layer per unit area on a corresponding electrode may be increased, for example, the coating weight of the active material layer per unit area on a positive electrode may range from 0.18 mg/mm$^2$ to 0.20 mg/mm$^2$, and the coating weight of the active material layer per unit area on a negative electrode may range from 0.08 mg/mm$^2$ to 0.10 mg/mm$^2$.

However, an increase in the coating weight of the active material layer per unit area means an increase in the thickness of the active material layer on the positive and negative electrodes, which affects the porosity of the active material layer, thereby affecting the diffusion degree of the electrolyte in the positive and negative electrodes, and deteriorating the electrochemical performance of the cell. The increase in thickness increases the impedance of the positive and negative electrodes, increases the migration impedance of lithium ions, and affects the dynamic performance of the cell.

In the case where the coating weight of the active material layer per unit area on the positive and negative electrodes is increased, in order to reduce the migration impedance of lithium ions, the migration number of lithium ions may be increased by adjusting the concentration of the lithium salt in the electrolyte, thereby improving the migration ability of lithium ions in the positive and negative electrodes, and improving the dynamic performance of the cell. However, with an increase in the concentration of the lithium salt, the viscosity of the electrolyte also increases. A high viscosity of the electrolyte will increase the shuttle resistance of lithium ions, deteriorate the dynamic performance of the cell, lead to increased battery polarization, and worsen the cycle performance of the cell.

To address the above issues, the embodiments of the disclosure optimize the electrical performance of the lithium ion cell by exploring a relationship among parameters such as the coating weight of the active material layers on the positive and negative electrodes, the concentration of the lithium salt, and the solvents in the electrolyte. This allows the cell to achieve high energy density through the coating weight while also maintaining good energy efficiency and dynamic performance.

In a first aspect, the embodiments of the disclosure provide the lithium ion cell. The lithium ion cell includes a positive electrode, a negative electrode, an electrolyte, and a separator. The separator is arranged between the positive electrode and the negative electrode, the positive electrode, the negative electrode, and the separator cooperatively form an electrode assembly, and at least part of the electrode assembly is infiltrated by the electrolyte. The electrolyte includes a lithium salt and solvents. The solvents include a linear solvent and a cyclic solvent, the positive electrode includes a positive current collector and a positive active material layer, and the negative electrode includes a negative current collector and a negative active material layer. The lithium ion cell satisfies: $0.46 \leq (10 \times D / (CWA + CWC) \times Wb / Wa \leq 3.8$, where $CWC$ represents a coating weight of the positive active material layer per unit area on the positive electrode, in mg/mm$^2$, $CWA$ represents a coating weight of the negative active material layer per unit area on the negative electrode, in mg/mm$^2$, $D$ represents a lithium-ion transference number of the electrolyte, $Wb$ represents a mass fraction of the lithium salt in the electrolyte, in %, $Wa$ represents a mass fraction of the linear solvent in the electrolyte, in %; $CWC$ ranges from 0.13 mg/mm$^2$ to 0.26 mg/mm$^2$, and $CWA$ ranges from 0.065 mg/mm$^2$ to 0.13 mg/mm$^2$.

The disclosure increases the coating weight of the positive active material layer per unit area on the positive electrode and the coating weight of the negative active material layer per unit area on the negative electrode, respectively, to enhance the capacity and energy density of the cell. To mitigate the impact of increased coating weight on the lithium-ion transference number and the dynamic performance of the cell, a specific relationship among the aforementioned coating weight, the concentration of the lithium salt in the electrolyte, and the mass fraction of the linear solvent in the electrolyte may be explored. Specifically, an increase in the concentration of the lithium salt can improve the lithium-ion transference number, but if the concentration of the lithium salt is too high, the viscosity of the electrolyte will increase, reducing the lithium-ion transference number in the cell and deteriorating the energy efficiency and cycle performance of the cell. Therefore, to enhance both the energy density and dynamic performance of the cell, the disclosure improves the viscosity of the electrolyte by leveraging the low viscosity characteristic of the linear solvent to facilitate lithium ion transport, increase the lithium-ion transference number, and thereby improve the dynamic performance of the cell, leading to simultaneous improvements in energy density and dynamic performance.

Therefore, based on the premise of heavy coating weight of the active material layers per unit area on the positive and negative electrodes, the disclosure explores a specific relationship among several parameters: the coating weight ($CWC$) of the positive active material layer per unit area on the positive electrode, the coating weight ($CWA$) of the negative active material layer per unit area on the negative electrode, the lithium-ion transference number ($D$), the mass fraction ($Wb$) of the lithium salt in the electrolyte, and the mass fraction ($Wa$) of the linear solvent in the electrolyte. The relationship satisfies: $0.46 \leq (10 \times D / (CWA + CWC)) \times Wb / Wa \leq 3.8$. Research has found that when this relationship holds, the lithium ion cell has high dynamic performance and energy density.

The relationship provided in the disclosure indicates that in the case where $CWC$ and $CWA$ are within the above range, the cell has high energy density. If $CWC$, $CWA$, $D$, $Wb$, and $Wa$ satisfy the above relationship, not only can the advantage of heavy coating weight per unit area on the positive and negative electrodes be realized, but also the concentration of the lithium salt and the viscosity of the electrolyte may be adjusted to improve the dynamic performance and energy efficiency of the cell. In the case where $CWC$ and $CWA$ are relatively high, the porosity of the positive and negative electrodes is limited, the wettability of the electrolyte is poor, and lithium ion migration is significantly hindered, affecting the electrochemical performance of the cell. In this case, an increase in $Wb$ can enhance the concentration of the lithium salt in the cell, thereby improving the lithium-ion transference number. However, an increase in $Wb$ also means an increase in the viscosity of the electrolyte, which hinders lithium ion transport between the positive and negative electrodes. By increasing $Wa$ to improve the viscosity of the electrolyte, the lithium-ion transference number may be further improved, enhancing the dynamic performance of the cell. In other words, when the above relationship holds, the lithium ion cell exhibits high energy density and dynamic performance.

Exemplarily, $(10 \times D / (CWA + CWC)) \times Wb / Wa$ may be 0.46, 0.55, 0.60, 0.75, 0.85, 0.95, 1.5, 2.5, 3.5, 3.8, etc. $CWC$ may be in a range of 0.13 mg/mm$^2$~0.26 mg/mm$^2$, and be any value within this range, for example, $CWC$ may be 0.13 mg/mm$^2$, 0.15 mg/mm$^2$, 0.18 mg/mm$^2$, 0.20 mg/mm$^2$, 0.22 mg/mm$^2$, 0.24 mg/mm$^2$, 0.26 mg/mm$^2$, etc. $CWA$ may be 0.065 mg/mm$^2$, 0.07 mg/mm$^2$, 0.08 mg/mm$^2$, 0.09 mg/mm$^2$, 0.10 mg/mm$^2$, 0.12 mg/mm$^2$, 0.13 mg/mm$^2$, etc.

It may be understood that, the coating weight of the positive active material layer per unit area on the positive electrode refers to a coating weight of a positive active material slurry (after drying) per unit area on the positive electrode, and the coating weight of the negative active material layer per unit area on the negative electrode refers to a coating weight of a negative active material slurry (after drying) per unit area on the negative electrode.

Further, $Wb / Wa$ satisfies: $0.15 < Wb / Wa \leq 0.25$.

In the case where $Wb / Wa$ is within the above range, the degree of lithium ion migration is optimal, which is beneficial to improving the dynamic performance of the cell. It not only avoids the situation where, when $Wb / Wa$ is too high, the concentration of the lithium salt in the electrolyte is high and the content of the linear solvent in the electrolyte is low, leading to a high number of the lithium ions, an increased viscosity of the electrolyte, and a hindered lithium ion migration, thus hindering the dynamic performance of the cell; it also avoids the situation where, when $Wb / Wa$ is too low, the concentration of the lithium salt in the electrolyte is low, limiting the number of the lithium ions that can be transported, thus affecting the electrochemical performance of the cell. Exemplarily, $Wb / Wa$ may be 0.155, 0.16, 0.17, 0.18, 0.19, 0.20, 0.22, 0.23, 0.24, 0.25, etc.

Further, $Wb$ ranges from 8% to 20%.

In the case where $Wb$ is within this range, the number of the lithium ions increases, the lithium-ion transference number increases, and the cell exhibits higher dynamic performance. This can avoid poor dynamic performance caused by a low concentration of the lithium salt and a small lithium-ion transference number, and can also avoid poor dynamic performance caused by an increase in the viscosity of the electrolyte and hindered lithium ion transport when the concentration of the lithium salt is too high. Exemplarily, $Wb$ may be 8%, 9%, 12%, 13%, 14%, 16%, 18%, 19%, 20%, etc.

Further, the lithium salt includes at least one of lithium hexafluorophosphate, lithium difluorosulfonimide, lithium difluorooxalate borate, or lithium bis(oxalate)borate.

The lithium salt serves as the provider of lithium ions in the electrolyte. The types of lithium salt mentioned above have good solubility and conductivity in non-aqueous solvents and can cooperate with carbonate solvents to form a stable passivation film on the surface of the negative electrode, which has high stability and thus is beneficial to improving the electrochemical performance of the lithium ion cell. Furthermore, the lithium salt may be lithium hexafluorophosphate, lithium bis(oxalato)borate, lithium difluorooxalate borate, lithium difluorosulfonimide, and lithium difluorooxalate borate, etc.

Further, $Wa$ ranges from 20% to 80%.

The linear solvent has the characteristics of poor conductivity, low viscosity, and low melting point. In the case where *Wa* is within the above range, the viscosity of the electrolyte is good, the transfer capacity of lithium ions is high, and the dynamic performance of the cell is good. This can avoid a poor conductivity of the electrolyte and a poor stability of an interface passivation film on the negative electrode caused by a too high *Wa*; it can also avoid a high viscosity of the electrolyte and a hindered lithium ion transfer caused by a too low *Wa*, and the dynamic performance of the battery is affected. Exemplarily, *Wa* may be 20%, 25%, 30%, 35%, 40%, 50%, 60%, 70%, 75%, 80%, etc.

Furthermore, the linear solvent includes at least one at least one of diethyl carbonate, ethyl methyl carbonate, dimethyl carbonate, ethyl acetate, ethyl propionate, propyl propionate, 1,1,2,2-tetrafluoroethyl-2,2,3,3-tetrafluoropropyl ether, or ethylene glycol dimethyl ether; and/or the cyclic solvent includes at least one of ethylene carbonate or propylene carbonate.

The organic solvent in the electrolyte has the characteristics of dissolving lithium salts, promoting lithium ion transfer, participating in the formation of the interface passivation film of the negative electrode, and having high stability. The linear solvent has the characteristics of low melting point, low viscosity, and low dielectric constant, which can change the viscosity of the electrolyte. The cyclic solvent has a high dielectric constant and high ionic conductivity, and participates in the formation of the interface passivation film of the negative electrode. By coordinating the use of linear solvents and cyclic solvents, the electrolyte has a high conductivity, a high lithium ion transfer capacity, and participates in the formation of a stable interface passivation film of the negative electrode, which is beneficial to improving the electrochemical performance of the cell.

Further, *D* ranges from 0.2 to 0.6.

Lithium-ion transference number is an important indicator to measure the effective migration of lithium ions in the lithium ion cell. In the case where the lithium-ion transference number is within this range, on the one hand, lithium ions can effectively deintercalate and intercalate in the positive and negative electrodes, reducing contact between lithium ions and the electrolyte, lowering the occurrence of interface side reactions, and prolonging the service life of the cell; on the other hand, lithium ions, as important cations involved in transfer and migration, have a high lithium-ion transference number, indicating a lower anion migration number, which is beneficial to reducing concentration polarization during charging and discharging, decreasing an interface transfer resistance, and improving the electrochemical performance of the cell. In the case where the lithium-ion transference number is lower than this range, the lithium ion transfer is limited, anion migration increases, and the interface transfer resistance of the cell increases, limiting the improvement of the electrochemical performance of the cell. Exemplarily, *D* may be 0.2, 0.25, 0.3, 0.35, 0.4, 0.45, 0.5, 0.55, 0.6, etc.

Further, *D* and *CWC* satisfy: $3.84 < 10 \times D / CWC < 46.15$; and/or, *D* and *CWA* satisfy: $7.69 < 10 \times D / CWA < 92.3$.

It may be noted that, $10 \times D / CWC$ represents a ratio of the lithium-ion transference number to the coating weight of the positive active material layer per unit area on the positive electrode; $10 \times D / CWA$ represents a ratio of the lithium-ion transference number to the coating weight of the negative active material layer per unit area on the negative electrode.

In the case where the above relationship is satisfied, the lithium ion cell has higher energy density and energy efficiency. This can avoid the situation where too high *CWC* and *CWA* result in heavy coating weights on the positive and negative electrodes, hindering the lithium ion transfer and lowering the lithium-ion transference number, thus leading to poor dynamic performance of the cell. It can also avoid the situation where too low *CWC* and *CWA*, although resulting in better transfer capacity of lithium ions, lead to low energy density of the cell and more difficult coating process control. Exemplarily, $10 \times D / CWC$ may be 3.85, 5, 10, 15, 20, 25, 30, 35, 40, 45, 46.10, etc.; $10 \times D / CWA$ may be 7.7, 8, 10, 15, 20, 30, 45, 55, 65, 75, 85, 90, 92.20, etc.

In the second aspect, the embodiments of the disclosure provide a battery pack, which includes a box body and the lithium ion cell provided in the first aspect, where the lithium ion cell is disposed in the box body.

Multiple lithium ion cells are arranged in series or in parallel in the box body of the battery pack, and the battery pack has a protective effect on the lithium ion cells.

In a third aspect, the embodiments of the disclosure provide an electricity-consumption device. The electricity-consumption device includes an electricity-consumption device body and the lithium ion cell provided in the first aspect, where the lithium ion cell is disposed in the electricity-consumption device body.

The lithium ion cell is configured to power the electricity-consumption device. The electricity-consumption device includes a positive pole and a negative pole, where the negative electrode of the lithium ion cell is connected to the negative pole, and the positive electrode of the lithium ion cell is connected to the positive pole.

The following will further explain the technical solutions of the disclosure in conjunction with more specific embodiments and experimental test results.

Embodiment 1

The lithium ion cell includes the positive electrode, the negative electrode, the electrolyte, and the separator. The separator is arranged between the positive electrode and the negative electrode, the positive electrode, the negative electrode, and the separator cooperatively form the electrode assembly, and at least part of the electrode assembly is infiltrated by the electrolyte. The electrolyte includes the lithium salt and the solvents, where the solvents include the linear solvent and the cyclic solvent, the positive electrode includes the positive current collector and the positive active material layer, and the negative electrode includes the negative current collector and the negative active material layer. The lithium ion cell satisfies the following. $CWC$ is 0.165 mg/mm$^2$, $CWA$ is 0.079 mg/mm$^2$, $D$ is 0.25, $Wb$ is 11.25%, $Wa$ is 63.66%. $CWC$ represents the coating weight of the positive active material layer per unit area on the positive electrode, in mg/mm$^2$; $CWA$ represents the coating weight of the negative active material layer per unit area on the negative electrode, in mg/mm$^2$; $D$ represents the lithium-ion transference number of the electrolyte; $Wb$ represents a mass fraction of lithium hexafluorophosphate in the electrolyte, in %; $Wa$ represents a mass fraction of ethyl methyl carbonate (EMC) and dimethyl carbonate in the electrolyte, in %.

The embodiments further provide a method for preparing the lithium ion cell. The method includes the following.

Preparation of the positive electrode: lithium iron phosphate, conductive carbon black (SP), and binder polyvinylidene fluoride (PVDF), which serve as the positive active material, are uniformly mixed in a mass ratio of 97:2:1 into solvent N-methyl-2-pyrrolidone (NMP) to obtain a positive electrode slurry. The positive electrode slurry is then coated on the positive current collector aluminum foil, where $CWC$ is 0.165 mg/mm$^2$, i.e., 254/1540.25 mg/mm$^2$. After drying, cold pressing, slitting, and cutting, the positive electrode is obtained.

Preparation of the negative electrode: artificial graphite, conductive carbon SP, thickener (sodium carboxymethyl cellulose, CMC), and binder (styrene-butadiene rubber, SBR), which serve as the negative active material, are uniformly mixed in a mass ratio of 96.5:0.5:1:2 into deionized water to obtain a negative electrode slurry. The negative electrode slurry is then coated on the negative current collector copper foil, where $CWA$ is 0.079 mg/mm$^2$, i.e., 122/1540.25 mg/mm$^2$. After drying, cold pressing, slitting, and cutting, the negative electrode is obtained.

Preparation of the electrolyte: in a glove box with an argon atmosphere and a moisture content $\leq$ 1 ppm, ethylene carbonate (EC), ethyl methyl carbonate (EMC), and dimethyl carbonate (DMC) are mixed, with mass fractions in the electrolyte of 21.59%, 31.83%, and 31.83%, respectively. EMC and DMC are linear solvents, and their combined mass fraction $Wa$ is 63.66%. Then, the dried electrolyte lithium salt, lithium hexafluorophosphate, is dissolved into the solvents, where a mass fraction ($Wb$) of the electrolyte lithium salt in the electrolyte is 11.25%. The lithium salt is stirred to be completely and uniformly dissolved, then vinylene carbonate and fluoroethylene carbonate are added and uniformly mixed to obtain the electrolyte, where the mass fraction of vinylene carbonate in the electrolyte is 2%, and the mass fraction of fluoroethylene carbonate in the electrolyte is 1.5%.

Preparation of the separator: a 16-micron polyethylene film is selected as the separator.

Assembly of the cell: the prepared positive electrode, separator, and negative electrode are stacked in sequence, with the separator positioned between the positive and the negative electrodes to separate them. After winding, the electrode assembly is formed. After welding of tabs, the electrode assembly is assembled into an outer packaging, the prepared electrolyte is injected, and then sealing, standing, formation, shaping, and capacity testing are performed on the electrode assembly to eventually obtain the lithium ion cell.

Measurement of the lithium-ion transference number D: the lithium-ion transference number is measured by using the constant potential polarization method on a symmetrical cell assembled with different electrolytes, which requires the use of both alternating current (AC) impedance and direct current (DC) polarization methods.

1) Assembly of the Li/Li symmetrical cell

In a glove box with an argon atmosphere and a moisture content $\leq$ 1 ppm, a 16-micron diameter lithium metal sheet is selected as the positive and negative electrodes, a 19-micron diameter polyethylene film is selected as the separator, and a button cell (model: CR2032) is assembled with the electrolyte containing the aforementioned linear solvent with a mass fraction of $Wa$ and the aforementioned lithium salt with a mass fraction of $Wb$.

2) Constant potential polarization method for testing the lithium-ion transference number of button cells

The assembled button cell is first subjected to electrochemical impedance spectroscopy (EIS) on an electrochemical workstation, with the EIS testing frequency range being 100000-0.01 Hz, and the measured resistance value is $R_0$. Then, a DC polarization test is conducted, applying a small and constant potential difference $\Delta V$ (typically around 10 mV) to the cell for 2000 s, while recording the current change over time. Initially, all mobile ions in the cell contribute to charge transport, resulting in the maximum initial current $I_0$. As polarization proceeds, a stable ion concentration gradient gradually forms within the cell, suppressing anion migration, and the current is predominantly contributed by cations (i.e., lithium ions), at which point the steady-state current Iss is recorded. Subsequently, another EIS test is performed with the same frequency range of 100000-0.01 Hz, and the measured resistance value is Rss. The lithium-ion transference number can then be calculated using the following formula:

$$D = \frac{I_{SS}\,(\Delta V - R_0 I_0)}{I_0(\Delta V - R_{SS} I_{SS})}$$

3) DC resistance (DCR) test for the lithium ion cell

The prepared pouch cell (rated capacity of 3.2 Ah) is tested in a charge-discharge testing cabinet. The cell is activated for two cycles in a 45 °C oven, with the charge-discharge steps being: charge at a constant current-constant voltage of 1 C to 3.65 V, and discharge at a constant current of 1 C to 2.5 V

The cell is placed in a 25 °C oven to stand until the surface temperature of the cell is 25 °C. The cell is then charged and discharged for three cycles for capacity calibration, with the charge-discharge steps being: charge at a constant current-constant voltage of 0.5 C to 3.65 V, and discharge at 0.5 C to 2.5 V The initial capacity of the cell is $C_0$.

DCR testing for the cell at different states of charge (SOC): the cell is first charged at a constant current-constant voltage of 0.5 C to 3.65 V, and then left to stand for 10 minutes. The cell is then discharged at a current of $0.1\,C_0$ for 1 hour, and left to stand for 1 hour, at which point the voltage is recorded as V1. Next, the cell is discharged at $1.07\,C_0$ for 30 seconds, and the voltage is recorded as V2. The DCR at 90% SOC is (V2 - V1) × 1000 / $C_0$. Then, the cell is discharged at a current of $0.1\,C_0$ for 3 hours, and left to stand for 1 hour, at which point the voltage is recorded as V3. Then, the cell is discharged at 1.07 C for 30 seconds and the voltage is recorded as V4. The DCR at 60% SOC is (V4 - V3) × 1000 / $C_0$. Then, the cell is discharged at a current of $0.1\,C_0$ for 3 hours, and left to stand for 1 hour, at which point the voltage is recorded as V5. Then, the cell is discharged at $1.07\,C_0$ for 30 seconds and the voltage is recorded as V6. The DCR at 30% SOC is (V6 - V5) × 1000 / $C_0$.

Embodiments 2 to 11 differ from Embodiment 1 in terms of *CWC, CWA, D, Wb, Wa*, and the mass fraction of the cyclic solvent, as detailed in Table 1.

Comparative Embodiments 1 to 5 differ from Embodiment 1 in terms of *CWC, CWA, D, Wb, Wa*, and the mass fraction of the cyclic solvent, as detailed in Table 1.

The parameter change details for Embodiments 1 to 11 and Comparative Embodiments 1 to 5 are illustrated in Table 1.

Table 1: Summary of Components and Parameters for the Embodiments and Comparative Embodiments

| | Positive Electrode Coating Weight (mg/mm$^2$) | Negative Electrode Coating Weight (mg/mm$^2$) | Cyclic Solvent EC Mass Fraction (%) | Linear Solvent Mass Fraction (%) | | | lithium salt mass fraction $Wb(\%)$ | lithium-ion transference number D | $10 \times D/CWC$ | $10 \times D/CWA$ | $Wbl Wa$ | $(10 \times D/(CWA+CWC)) \times W b/Wa$ |
|---|---|---|---|---|---|---|---|---|---|---|---|---|
| | | | | EMC | DMC | $Wa$ | | | | | | |
| Embodiment 1 | 0.165 | 0.079 | 21.59 | 31.83 | 31.83 | 63.66 | 11.25 | 0.25 | 15.16 | 31.56 | 0.18 | 1.81 |
| Embodiment 2 | 0.178 | 0.099 | 21.4 | 31.56 | 31.56 | 63.12 | 11.98 | 0.24 | 13.49 | 24.16 | 0.19 | 1.64 |
| Embodiment 3 | 0.208 | 0.1 | 20.05 | 32.06 | 32.06 | 64.12 | 12.33 | 0.32 | 15.40 | 32.01 | 0.19 | 2.00 |
| Embodiment 4 | 0.208 | 0.1 | 18.78 | 32.68 | 32.68 | 65.36 | 12.36 | 0.43 | 20.70 | 43.01 | 0.19 | 2.64 |
| Embodiment 5 | 0.208 | 0.1 | 18.03 | 33.01 | 33.01 | 66.02 | 12.45 | 0.49 | 23.59 | 49.01 | 0.19 | 3.00 |
| Embodiment 6 | 0.208 | 0.1 | 15.68 | 34.01 | 34.01 | 68.02 | 12.80 | 0.52 | 25.03 | 52.01 | 0.19 | 3.18 |
| Embodiment 7 | 0.208 | 0.1 | 24.68 | 30.51 | 30.51 | 61.02 | 10.80 | 0.32 | 15.40 | 32.01 | 0.18 | 1.84 |
| Embodiment 8 | 0.208 | 0.1 | 21.88 | 32.06 | 32.06 | 64.12 | 10.50 | 0.22 | 10.59 | 22.00 | 0.16 | 1.17 |
| Embodiment 9 | 0.208 | 0.1 | 18.7 | 32.06 | 32.06 | 64.12 | 13.68 | 0.51 | 24.55 | 51.01 | 0.21 | 3.54 |
| Embodiment 10 | 0.208 | 0.1 | 24.17 | 30.00 | 30.00 | 60 | 12.33 | 0.28 | 13.48 | 28.00 | 0.21 | 1.87 |
| Embodiment 11 | 0.208 | 0.1 | 12.17 | 36.00 | 36.00 | 72 | 12.33 | 0.49 | 23.59 | 49.01 | 0.17 | 2.73 |
| Comparative Embodiment 1 | 0.195 | 0.096 | 18.5 | 31.50 | 31.50 | 63 | 15.00 | 0.55 | 28.24 | 57.24 | 0.24 | 4.50 |
| Comparative Embodiment 2 | 0.162 | 0.078 | 11.5 | 32.50 | 32.50 | 65 | 20.00 | 0.45 | 27.72 | 57.76 | 0.31 | 5.76 |
| Comparative Embodiment 3 | 0.208 | 0.1 | 28.5 | 30.00 | 30.00 | 60 | 8.00 | 0.05 | 2.41 | 5.00 | 0.13 | 0.22 |
| Comparative Embodiment 4 | 0.208 | 0.101 | 11.5 | 37.50 | 37.50 | 75 | 10.00 | 0.1 | 4.81 | 9.87 | 0.13 | 0.43 |
| Comparative Embodiment 5 | 0.143 | 0.071 | 18.50 | 33.00 | 33.00 | 66 | 12.00 | 0.5 | 35.01 | 70.01 | 0.18 | 4.24 |

The lithium ion cell obtained in the each of above embodiments is subjected to charge and discharge cycle testing on the charge-discharge tester at temperatures of 25°C and 45°C. The cell is tested with a current of 0.2 C (rated capacity of 3.2 Ah). Each cycle includes the following steps: charging at a constant current of 0.5 C and constant voltage to 3.65 V with a cutoff current of 0.02 C, then discharging at a constant current of 0.2 C to 2.5V. The DCR performance of the cell at different SOC states is also tested to further evaluate its dynamic performance.

Capacity retention rate is calculated as follows: capacity retention rate after 800 cycles = (discharge capacity after 800 cycles / discharge capacity of the first cycle) × 100%.

The energy efficiency is calculated as follows: cell energy efficiency after 800 cycles = (discharge energy after 800 cycles / charge energy of the 800th cycle) × 100%.

Table 2: Cell Performance Test Data

| | Capacity Retention Rate (%) | Energy Efficiency (%) | DCR (mΩ) | | | |
|---|---|---|---|---|---|---|
| | | | 90% SOC | 60% SOC | 30% SOC | 10% SOC |
| Embodiment 1 | 98.00 | 94.56 | 25 | 28 | 35 | 42 |
| Embodiment 2 | 96.50 | 94.28 | 27 | 30 | 38 | 45 |
| Embodiment 3 | 97.86 | 93.26 | 26 | 28 | 36 | 41 |
| Embodiment 4 | 96.85 | 93.86 | 24 | 26 | 33 | 40 |
| Embodiment 5 | 97.56 | 94.26 | 24 | 25 | 36 | 40 |
| Embodiment 6 | 96.48 | 94.38 | 22 | 24 | 33 | 39 |
| Embodiment 7 | 95.63 | 93.25 | 29 | 36 | 42 | 50 |
| Embodiment 8 | 95.22 | 92.89 | 27 | 30 | 37 | 42 |
| Embodiment 9 | 98.02 | 93.68 | 23 | 26 | 33 | 40 |
| Embodiment 10 | 97.66 | 92.15 | 30 | 35 | 41 | 47 |
| Embodiment 11 | 97.01 | 94.89 | 20 | 24 | 30 | 36 |
| Comparative Embodiment 1 | 92.36 | 92.12 | 28 | 36 | 42 | 50 |
| Comparative Embodiment 2 | 92.26 | 91.12 | 32 | 42 | 46 | 56 |
| Comparative Embodiment 3 | 72.45 | 68.90 | 36 | 50 | 57 | 62 |
| Comparative Embodiment 4 | 78.52 | 67.56 | 33 | 46 | 55 | 58 |
| Comparative Embodiment 5 | 85.20 | 83.40 | 22 | 25 | 33 | 38 |

From Table 1 and Table 2, it can be seen that the capacity retention rate and energy efficiency of comparative embodiments 1 to 5 are lower than those of embodiments 1 to 11. Under different SOC conditions, DCR values of comparative embodiments 1 to 5 are higher than those of embodiments 1 to 11. A lower DCR value indicates lower impedance of the cell, reflecting better dynamic performance of the cell. These data show that since comparative embodiments 1 to 5 do not satisfy the relationship $0.46 \leq (10 \times D / (CWA + CWC)) \times Wb / Wa \leq 3.8$, it indicates that when this relationship is satisfied, the lithium ion cell can not only leverage the heavy coating weight per unit area on the positive and negative electrodes to achieve higher energy density but also optimize the electrochemical performance of the cell by adjusting the amount of linear solvent to increase the lithium-ion transference number when the concentration of the lithium salt is high.

Analysis of comparative embodiment 4 and embodiments 3 to 11 shows that when CWA and CWC are similar, the higher Wa and Wb and lower content of the cyclic solvent in comparative embodiment 4 result in a significant decline in capacity retention rate and energy efficiency compared to embodiments 3 to 11. This is because the cyclic solvent participates in formation of the interface passivation film on the negative electrode, and the stability of the passivation film is poor, affecting the electrochemical performance of the cell.

Analysis of comparative embodiment 5 and embodiment 5 shows that the electrochemical performance in comparative embodiment 5 is lower than that in embodiment 5. This is because when CMC and CMD are lower, the content of active materials in the electrode is reduced, decreasing the compaction density of the cell and leading to lower reversible capacity and voltage, thus resulting in poor electrochemical performance.

Analysis of embodiments 4 and 7 shows that embodiment 4 has better capacity retention rate and energy efficiency than embodiment 7, and the DCR value in embodiment 4 is lower than that in embodiment 7. This indicates that when the coating weights on the positive and negative electrodes are consistent, if $Wb$ is increased, $Wa$ needs to be further increased to improve the viscosity of the electrolyte, thereby increasing the lithium-ion transference number, enhancing the dynamic performance of the cell, and improving the electrochemical performance of the cell.

Analysis of embodiments 8 and 9, as well as comparative embodiment 3 and embodiment 10, shows that the electrochemical performance in embodiment 9 is better than that in embodiment 8, and the electrochemical performance in embodiment 10 is better than that in comparative embodiment 3. This indicates that when CMC, CMD, and $Wa$ are the same, as $Wb$ increases, the number of lithium ions provided increases, resulting in a higher lithium-ion transference number and better dynamic performance of the cell. However, if $Wb$ is too high, the electrochemical performance is negatively affected due to the increased viscosity of the electrolyte, hindering lithium-ion transport and affecting the dynamic performance of the cell.

Analysis of embodiments 10 and 11 shows that embodiment 11 has better capacity retention rate and energy efficiency than embodiment 10, and the DCR value in embodiment 11 is lower than that in embodiment 10. This indicates that when CMC, CMD, and $Wb$ are the same, an increase in $Wa$ improves the viscosity of the electrolyte, facilitating lithium-ion transport and thereby enhancing the electrochemical performance of the cell.

In summary, performance tests show that adjusting $CWA$ and $CWC$ can improve the energy density of the cell, and adjusting $Wb$ and $Wa$ can improve the dynamic performance of the lithium ion cell. This indicates that when the relationship $0.46 \leq (10 \times D / (CWA + CWC)) \times Wb / Wa \leq 3.8$ is satisfied, not only can leverage the heavy coating weight per unit area on the positive and negative electrodes to achieve higher energy density of the cell, but also the dynamic performance and energy efficiency of the cell may be improved by changing the concentration of the lithium salt and the viscosity of the electrolyte.

The lithium ion cell, the battery pack, and the electricity-consumption device disclosed in the above embodiments have been described in detail. Specific embodiments are used to explain the principles and implementations of the disclosure. The illustrations of the above embodiments are only to help understand the lithium ion cell, the battery pack, and the electricity-consumption device. For those skilled in the art, changes may be made in the specific embodiments and application ranges based on the ideas of the disclosure. Therefore, the content of this specification should not be construed as limiting the disclosure.

## Claims

1. A lithium ion cell, comprising: a positive electrode, a negative electrode, an electrolyte, and a separator, wherein

   the separator is arranged between the positive electrode and the negative electrode, the positive electrode, the negative electrode, and the separator cooperatively form an electrode assembly, and at least part of the electrode assembly is infiltrated by the electrolyte;
   the electrolyte comprises a lithium salt and solvents, wherein the solvents comprise a linear solvent and a cyclic solvent, the positive electrode comprises a positive current collector and a positive active material layer, and the negative electrode comprises a negative current collector and a negative active material layer; and
   the lithium ion cell satisfies: $0.46 \leq (10 \times D / (CWA + CWC) \times Wb / Wa \leq 3.8$, wherein $CWC$ represents a coating weight of the positive active material layer per unit area on the positive electrode, in mg/mm$^2$; $CWA$ represents a coating weight of the negative active material layer per unit area on the negative electrode, in mg/mm$^2$; $D$ represents a lithium-ion transference number of the electrolyte; $Wb$ represents a mass fraction of the lithium salt in the electrolyte, in %; $Wa$ represents a mass fraction of the linear solvent in the electrolyte, in %; $CWC$ ranges from 0.13 mg/mm$^2$ to 0.26 mg/mm$^2$; and $CWA$ ranges from 0.065 mg/mm$^2$ to 0.13 mg/mm$^2$.

2. The lithium ion cell of claim 1, wherein $Wb / Wa$ satisfies: $0.15 < Wb / Wa \leq 0.25$.

3. The lithium ion cell of claim 1 or 2, wherein $Wb$ ranges from 8% to 20%.

4. The lithium ion cell of any one of claims 1 to 3, wherein the lithium salt comprises at least one of lithium hexafluorophosphate, lithium difluorosulfonimide, lithium difluorooxalate borate, or lithium bis(oxalate)borate.

5. The lithium ion cell of any one of claims 1 to 4, wherein $Wa$ ranges from 20% to 80%.

6. The lithium ion cell of any one of claims 1 to 5, wherein at least one of:

   the linear solvent comprises at least one of diethyl carbonate, ethyl methyl carbonate, dimethyl carbonate, ethyl acetate, ethyl propionate, propyl propionate, 1,1,2,2-tetrafluoroethyl-2,2,3,3-tetrafluoropropyl ether, or ethylene glycol dimethyl ether; or
the cyclic solvent comprises at least one of ethylene carbonate or propylene carbonate.

7. The lithium ion cell of any one of claims 1 to 6, wherein $D$ ranges from 0.2 to 0.6.

8. The lithium ion cell of any one of claims 1 to 7, wherein at least one of:

   $D$ and $CWC$ satisfy: $3.84 < 10 \times D / CWC < 46.15$; or
   $D$ and $CWA$ satisfy: $7.69 < 10 \times D / CWA < 92.3$.

9. A battery pack, comprising a box body and the lithium ion cell of any one of claims 1 to 8 disposed in the box body.

10. An electricity-consumption device, comprising an electricity-consumption device body and the lithium ion cell of any one of claims 1 to 8, the lithium ion cell being disposed in the electricity-consumption device body.